# EUROPEAN PATENT APPLICATION

(11) **EP 4 381 952 A1**
(43) Date of publication of application: **12.06.2024**
(21) Application number: 22852974.9
(22) Date of filing: 29.07.2022
(51) Int. Cl.: A23F 5/24, A23F 5/18, A23F 5/28, A23F 5/36

(54) **COFFEE BEAN EXTRACT WITH IMPROVED FLAVOR, FOOD OR BEVERAGE, PACKAGED BEVERAGE AND METHOD FOR PRODUCING COFFEE BEAN EXTRACT**

(30) Priority: 03.08.2021 JP 2021127837
(71) Applicant: Suntory Holdings Limited, Osaka 530-8203 (JP)
(72) Inventor: MUKAI, Atsushi, Kawasaki-shi, Kanagawa 211-0067 (JP); YOSHII, Takaaki, Soraku-gun, Kyoto 619-0284 (JP); TOMINAGA, Kenta, Soraku-gun, Kyoto 619-0284 (JP); KAMEZAWA, Nao, Kawasaki-shi, Kanagawa 211-0067 (JP); ITO, Kosuke, Kawasaki-shi, Kanagawa 211-0067 (JP); MITSUHASHI, Morio, Kawasaki-shi, Kanagawa 211-0067 (JP)
(74) Representative: Vossius & Partner Patentanwälte Rechtsanwälte mbB
(86) International application number: PCT/JP2022/029349
(87) International publication number: WO 2023/013555

(57) **Abstract**

The present invention aims to provide, for example, a coffee bean extract containing a Liberica coffee bean extract and having an improved flavor with a less musty smell, and a method of producing the coffee bean extract. The present invention relates to a coffee bean extract having an isovaleric acid content per soluble solids of less than 10 ppm, wherein the coffee beans include Liberica coffee beans.

## Description

### TECHNICAL FIELD

The present invention relates to a coffee bean extract. The present invention also relates to, for example, a food or beverage containing the coffee bean extract. The present invention also relates to a beverage in a sealed container. The present invention also relates to a method of producing a coffee bean extract.

### BACKGROUND ART

Coffee beverages are popular recreational beverages and are usually produced by adding a roasted coffee bean extract. Generally, there are three types of coffee beans: *Coffea arabica, Coffea robusta,* and *Coffea liberica.* Liberica coffee beans characteristically have a strong bitterness and a strong musty smell. Thus, most of commonly available coffee beverages are produced by adding a coffee bean extract from coffee beans mainly including Arabica or Robusta coffee beans. Use of Liberica coffee beans as coffee bean extract ingredients has been rare.

For example, Patent Literature 1 discloses a method of extracting a volatile component from a tasty material composed of roasted coffee beans or the like, and a volatile component obtained by the extraction method. For the type of coffee beans, use of *Coffea arabica, Coffea canephora* var. *robusta, Coffea canephora* var. *conulon,* or *Coffea liberica* is suggested because these types have a high aromatic component content. However, Patent Literature 1 nowhere describes or suggests that use of *Coffea liberica* as the type of coffee beans results in a negative smell like a musty smell in a volatile component.

Patent Literature 2 discloses a method of improving the flavor peculiar to the species such as *Coffea robusta* by reducing the off-taste and unpleasant taste of green coffee beans, without requiring a large-scale apparatus. *Coffea arabica, Coffea robusta,* and *Coffea liberica* are suggested as the types of green coffee beans. In order to provide coffee and a coffee beverage having a high aromatic component content and a rich flavor even after sterilization, Patent Literature 3 discloses coffee and a coffee beverage essentially containing a liquid coffee extract from seeds of *Coffea (Coffea arabica, Coffea robusta, Coffea Liberica).* However, it is nowhere described or suggested that use of C. *liberica* as the *Coffea* species or green coffee beans results in a negative smell like a musty smell.

### CITATION LIST

### - Patent Literature

Patent Literature 1: WO 2005/044014
Patent Literature 2: JP 2003-009767 A
Patent Literature 3: JP 2000-201622 A

### SUMMARY OF INVENTION

### - Technical Problem

The aroma of coffee bean extracts has many elements such as bitterness, sweetness, acidity, and fragrance. Some species contain a component that causes a negative smell like a musty smell. As described above, Liberica coffee beans characteristically have a strong bitterness and a strong musty smell. Use of Liberica coffee beans as coffee bean extract ingredients has been rare.

Recent climate change due to global warming has become a global issue, and there are concerns that the area for cultivation of *Coffea* with a limited production area will decrease in the future. Thus, there is a demand for development of coffee bean extracts using Liberica coffee beans as ingredients, which have been rarely used. There is also an increasing diversity in consumer preference of coffee beverages, leading to a demand for development of coffee beverages having a novel aroma. For example, a coffee bean extract having an aroma of a component derived from Liberica coffee beans and having a less musty smell is considered to be useful as an ingredient of food or beverages such as coffee beverages having a novel aroma.

The present invention aims to provide a coffee bean extract containing a Liberica coffee bean extract and having an improved flavor with a less musty smell, and a method of producing the coffee bean extract. The present invention also aims to provide a food or beverage containing a coffee bean extract containing a Liberica coffee bean extract and having a less musty smell.

### - Solution to Problem

The present inventors extensively studied coffee bean extracts containing Liberica coffee beans, with the idea that such an extract could be used as a novel coffee bean extract having a characteristic aroma of Liberica coffee beans, if its negative smell could be reduced. In particular, the present inventors extensively studied a musty smell of coffee bean extracts containing Liberica coffee beans. As a result, they found that the musty smell is caused by isovaleric acid, which is one of components of coffee bean extracts containing Liberica coffee beans.

The present inventors found that the musty smell was reduced in, for example, coffee bean extracts containing Liberica coffee beans and food or beverages containing the extract when the isovaleric acid content per soluble solids was less than or equal to a specific amount. They also found that a characteristic aroma of Liberica coffee beans was present in such products. In other words, they found that the musty smell is reduced and the flavor is improved when the isovaleric acid content per soluble solids is less than or equal to a specific amount in, for example, coffee bean extracts containing Liberica coffee beans and food or beverages containing the extract.

In other words, the present invention encompasses the following coffee bean extract and the like.
(1) A coffee bean extract having an isovaleric acid content per soluble solids of less than 10 ppm, wherein the coffee beans include Liberica coffee beans.
(2) A coffee bean extract containing: isovaleric acid; and a compound (I) detected at m/z 727.35 in LC-MS analysis, wherein an isovaleric acid content per soluble solids is less than 10 ppm, and a ratio of an area value at m/z 727.35 of the compound (I) to an area value at m/z 353.30 of xanthohumol is 0.11 or greater when an aqueous solution of the coffee bean extract containing 0.3 mass% soluble solids is diluted in half with ethanol and subjected to LC-MS analysis using 99 ppm xanthohumol as an internal standard.
(3) A food or beverage containing the coffee bean extract according to (1) or (2) above, wherein an isovaleric acid content per soluble solids is less than 10 ppm.
(4) The food or beverage according to (3) above, wherein the soluble solids include Liberica coffee bean-derived soluble solids, and the Liberica coffee bean-derived soluble solids content is more than 0.0001 mass%.
(5) The food or beverage according to (3) or (4) above, wherein the food or beverage is a coffee beverage.
(6) The food or beverage according to (3) or (4) above, wherein the food or beverage is a coffee concentrate.
(7) The food or beverage according to (3) or (4) above, wherein the food or beverage is an instant coffee.
(8) An aroma-imparting composition, containing the coffee bean extract according to (1) or (2) above.
(9) A beverage in a sealed container, containing a coffee bean extract from coffee beans including Liberica coffee beans, wherein an isovaleric acid content per soluble solids is less than 10 ppm.
(10) The beverage in a sealed container according to (9) above, wherein the beverage is a coffee beverage.
(11) A method of producing a coffee bean extract, including: a roasting step of roasting coffee beans including Liberica coffee beans to obtain roasted coffee beans; an extraction step of obtaining an extract from the roasted coffee beans with water; and an isovaleric acid reduction step of reducing the isovaleric acid content per soluble solids to less than 10 ppm in the extract obtained.

### - Advantageous Effects of Invention

The present invention can provide a coffee bean extract containing a Liberica coffee bean extract and having an improved flavor with a less musty smell, and a method of producing the coffee bean extract. The present invention can provide a food or beverage containing a Liberica coffee bean extract and having a less musty smell.

The present invention can provide a coffee bean extract containing Liberica coffee beans in its ingredients and having a less musty smell, and a method of producing the coffee bean extract. The present invention can also provide a food or beverage and an aroma-imparting composition each containing a coffee bean extract containing Liberica coffee beans in its ingredients and having a less musty smell. The present invention can also provide a beverage in a sealed container, the beverage containing Liberica coffee beans in its ingredients and having a less musty smell. The coffee bean extract of the present invention, which has a less musty smell and a characteristic aroma of Liberica coffee beans, can be used in, for example, development and production of products such as food or beverages with a novel aroma.

### BRIEF DESCRIPTION OF DRAWINGS

FIG. 1 is a graph showing the isovaleric acid content (ppm) per soluble solids in an extracted coffee bean essence according to each of Comparative Example 1 and Examples 1 to 7.
FIG. 2 is a graph showing the area value at m/z 727.35 obtained from LC-MS analysis of the extracted coffee bean essence according to each of Comparative Example 1 and Examples 1 to 7.

### DESCRIPTION OF EMBODIMENTS

Herein, "ppm" means "mass ppm". The "mass ppm" means "10⁻⁴ mass%".

### <Coffee bean extract>

The coffee bean extract of the present invention is a coffee bean extract having an isovaleric acid content per soluble solids of less than 10 ppm, wherein the coffee beans include Liberica coffee beans. The isovaleric acid content in the coffee bean extract can be reduced by steps such as a green bean pre-treatment step, an extraction step, a concentration treatment step, and an aroma removal treatment step in a method of producing a coffee bean extract described later. As described above, Liberica coffee beans characteristically have a strong bitterness and a strong musty smell. However, the present invention can provide a coffee bean extract from coffee beans including Liberica coffee beans and having a less musty smell at the same time. In other words, the present invention can reduce the musty smell of an extract from coffee beans including Liberica coffee beans and improve the flavor thereof, thus providing a coffee bean extract with an improved flavor. In order to further effectively reduce the musty smell, in the coffee bean extract of the present invention, the isovaleric acid content per soluble solids is preferably 8 ppm or less, more preferably 7 ppm or less, more preferably 6.5 ppm or less, more preferably 3 ppm or less, still more preferably 2 ppm or less, yet still more preferably 1.5 ppm or less, yet still more preferably 1.3 ppm or less, yet still more preferably 1.285 ppm or less, particularly preferably 1 ppm or less.

In the coffee bean extract of the present invention, the isovaleric acid content per soluble solids can be measured using high performance liquid chromatography-mass spectrometry (LC-MS). Specifically, the content can be measured under conditions 1 of LC-MS analysis described in EXAMPLES described later. In the coffee bean extract of the present invention, the lower limit of the isovaleric acid content per soluble solids is not limited. The lower limit is 0 ppm or more, preferably more than 0 ppm.

In one embodiment, in the coffee bean extract of the present invention, the isovaleric acid content per soluble solids is preferably more than 0 ppm and less than 10 ppm, preferably more than 0 ppm and 8 ppm or less, more preferably more than 0 ppm and 7 ppm or less, more preferably more than 0 ppm and 6.5 ppm or less, more preferably more than 0 ppm and 3 ppm or less, still more preferably more than 0 ppm and 2 ppm or less, yet still more preferably more than 0 ppm and 1.5 ppm or less, yet still more preferably more than 0 ppm and 1.3 ppm or less, yet still more preferably more than 0 ppm and 1.285 ppm or less, particularly preferably more than 0 ppm and 1 ppm or less.

Herein, that "the isovaleric acid content per soluble solids is less than 10 ppm" means that the isovaleric acid content per soluble solids (1 Brix) is less than 10 ppm and can be rephrased by an expression that "the isovaleric acid content per soluble solids is less than 10 ppm/Brix". The isovaleric acid content per soluble solids (1 Brix) is the value determined by measuring the isovaleric acid content of a solution containing 1 mass% soluble solids dissolved therein.

The coffee bean extract of the present invention may be a coffee bean extract containing: isovaleric acid; and a compound (I) detected at m/z 727.35 in LC-MS analysis, wherein an isovaleric acid content per soluble solids is less than 10 ppm, and the ratio of the area value at m/z 727.35 of the compound (I) to the area value at m/z 353.30 of xanthohumol is 0.11 or greater when an aqueous solution of the coffee bean extract containing 0.3 mass% soluble solids is diluted in half with ethanol and subjected to LC-MS analysis using 99 ppm xanthohumol as an internal standard.

The coffee bean extract has an isovaleric acid content per soluble solids of more than 0 ppm and less than 10 ppm. A preferred range of the isovaleric acid content per soluble solids is as described above for the coffee bean extract.

The compound detected at m/z 727.35 in LC-MS analysis is a compound whose peak is detected at m/z 727.35 in the analysis. The area value at m/z 727.35 of the compound (I) is the peak area value at the same m/z 727.35. Xanthohumol is a component not contained in coffee beans and is used as an internal standard substance. The peak of xanthohumol is usually detected at m/z 353.30 in LC-MS analysis. The area value of xanthohumol at m/z 353.30 is the area value of the peak derived from xanthohumol at m/z 353.30. LC-MS analysis is performed by the method described in EXAMPLES described later.

In the coffee bean extract, the ratio of the (peak) area value at m/z 727.35 described above to the (peak) area value at m/z 353.30 described above ((area value at m/z 727.35)/(area value at m/z 353.30)) is 0.11 or greater.

The coffee bean extract can also be regarded as a coffee bean extract containing: isovaleric acid; and a compound (I) showing an ionic strength at m/z 727.35 in LC-MS analysis, wherein an isovaleric acid content per soluble solids is less than 10 ppm, and the ionic strength of the compound (I) at m/z 727.35 relative to the ionic strength of xanthohumol at m/z 353.30 is 0.11 or greater when an aqueous solution of the coffee bean extract containing 0.3 mass% soluble solids is diluted in half with ethanol and subjected to LC-MS analysis using 100 ppm xanthohumol as an internal standard.

The carbohydrate fraction present in coffee beans (green coffee, roasted coffee) is known to vary in amounts of components depending on the type and production area of the coffee beans. Atractylglycosides is a diterpene glycoside found in coffee beans, and KA I, KA II, and KA III are known (Reference 1: Coffee: Recent Developments (World Agriculture Series), edited by R. J. Clarke and O. G. Vitzthum, published by Wiley-Blackwell; 1st edition: February 15, 2001, pp. 1-3 and 36-38). Reference 2 (JP 2013-96895 A) describes a method of evaluating the quality of coffee beans, using 2-O-β-D-glucopyranosyl-atractyligenin (Kaffee Atractyloside II (KA II)) as an indicator substance. According to Reference 2, a liquid coffee extract having a higher KA II content has a stronger bitter and astringent taste. The present inventors found that a coffee bean extract containing Liberica coffee beans contains a large amount of a compound (compound (I)) detected at m/z 727.35 in LC-MS analysis, compared to a coffee bean extract containing other coffee beans (including Arabica or Robusta coffee beans but not including Liberica coffee beans) in its ingredients. The compound (I) detected at m/z 727.35 is assumed to be a compound represented by formula (I) shown below (3'-O-β-D-glucopyranosyl-2'-O-isovaleroyl-2-β-(2-deoxy-atractyligenin)-β-D-glucopyranoside), which is known as Kaffee Atractyloside I (hereinafter also referred to as "KA I") (Reference 3: Roman Lang et al. "2-O-b-D-Glucopyranosyl-carboxyatractyligenin from Coffea L. inhibits adenine nucleotide translocase in isolated mitochondria but is quantitatively degraded during coffee roasting" Phytochemistry 93 (2013), pp. 124-135).

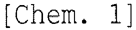

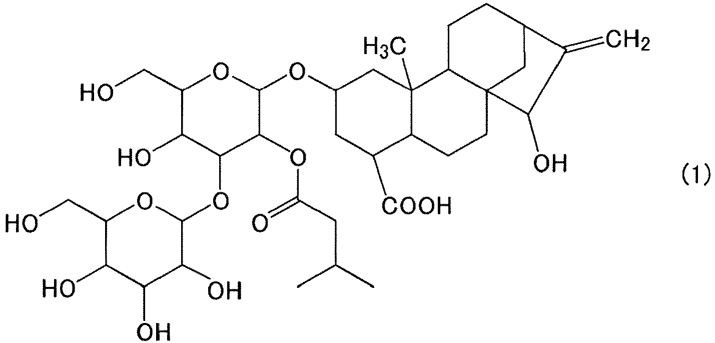

The present inventors also conducted studies, assuming that the amount of the compound (I) would serve as an indicator of whether the raw material coffee beans of the coffee bean extract include Liberica coffee beans. As a result, they found the following findings as shown in EXAMPLES described later: in the case of a coffee bean extract from coffee beans including Liberica coffee beans, when an aqueous solution of the coffee bean extract containing 0.3 mass% soluble solids was diluted in half with ethanol and subjected to LC-MS analysis using 99 ppm xanthohumol as an internal standard, the ratio of the area value at m/z 727.35 of the extract to the area value at m/z 353.30 of xanthohumol ((area value at m/z 727.35)/(area value at m/z 353.30)) was 0.11 or greater. In other words, when an aqueous solution of a coffee bean extract containing 0.3 mass% soluble solids is diluted in half with ethanol and subjected to LC-MS analysis using 99 ppm xanthohumol as an internal standard, if the ratio of the area value at m/z 727.35 of the extract to the area value at m/z 353.30 of xanthohumol (hereinafter, the ratio is also referred to as "the internal standard value of the compound (I) (i.e., KA I) in the coffee bean extract") is 0.11 or greater, it means that the coffee bean extract is a coffee bean extract from coffee beans including Liberica coffee beans. The isovaleric acid content in the coffee bean extract can be reduced by steps such as a green bean pre-treatment step, an extraction step, an aroma removal treatment step, and a concentration treatment step in a method of producing a coffee bean extract described later.

The internal standard value of the compound (I) in the coffee bean extract of the present invention is preferably 0.15 or greater, more preferably 0.2 or greater, still more preferably 0.3 or greater. As described above, that the internal standard value of the compound (I) in the coffee bean extract is 0.11 or greater is an indicative that the raw material coffee beans include Liberica coffee beans. The indicative indicates that the mixing ratio of Liberica coffee beans in the raw material coffee beans increases as the internal standard value becomes greater than 0.11. The coffee bean extract of the present invention is one in which the musty smell from Liberica coffee beans is reduced while the internal standard value of the compound (I) in the coffee bean extract is in the above range. When the internal standard value of the compound (I) in the coffee bean extract is in the above range, a characteristic aroma of Liberica coffee beans is more clearly felt. The characteristic aroma of Liberica coffee beans is a complex aroma of a mixture of bitterness and sweetness. It is an aroma that imparts richness and body to food or beverages.

The internal standard value of the compound (I) is preferably 1 or less, more preferably 0.6 or less, still more preferably 0.5 or less. In one embodiment, the internal standard value of the compound (I) is preferably 0.11 to 1, more preferably 0.15 to 1, still more preferably 0.2 to 0.6, particularly preferably 0.3 to 0.5.

As described above, the internal standard value of the compound (I) in the coffee bean extract of the present invention can be measured by high performance liquid chromatography-mass spectrometry (LC-MS) using the method described in EXAMPLES described later. Specifically, conditions 2 for LC-MS analysis in EXAMPLES can be used as the measurement conditions.

As shown in EXAMPLES described later, when an aqueous solution of a coffee bean extract containing 0.3 mass% (0.3 Brix) soluble solids is diluted in half with ethanol, and the diluted solution is mixed with 50% ethanol having a xanthohumol concentration of 10,000 ppm at a volume ratio of 100:1 (diluted solution of coffee extract in ethanol:solution of 10,000 ppm xanthohumol in 50% ethanol) to obtain a mixture (xanthohumol concentration: 99 ppm), LC-MS analysis of the mixture can provide the area value at m/z 727.35 of the compound (I) and the area value of xanthohumol at m/z 353.30. When diluting the aqueous solution of a coffee bean extract in half with ethanol, the aqueous solution and ethanol are simply mixed at a volume ratio of 1:1. When the soluble solids concentration in the aqueous solution of a coffee bean extract is lower than 0.3 mass%, the aqueous solution may be concentrated by a known concentration method to adjust the soluble solids concentration to 0.3 mass%.

In the present invention, *Coffea liberica* includes C. *Liberica* Bull ex Hiern *(Coffea liberica)* and its variants. For example, species such as Excelsa *(C. Liberica* var. *dewevrei f. dewevrei)* and Barako, and hybrids of these species with other species are included.

The coffee bean extract of the present invention is a coffee bean extract from coffee beans including Liberica coffee beans or a coffee bean extract in which the ratio of the area value at m/z 727.35 of the compound (I) to the area value at m/z 353.30 of xanthohumol is 0.11 or greater when an aqueous solution of the coffee bean extract containing 0.3 mass% soluble solids is diluted in half with ethanol and subjected to LC-MS analysis using 99 ppm xanthohumol as an internal standard. Preferably, the coffee bean extract of the present invention is one extracted from coffee beans (raw material coffee beans) including 1 mass% or more Liberica coffee beans. More preferably, the raw material coffee beans include Liberica coffee beans in an amount of 10 mass% or more, still more preferably 20 mass% or more, yet still more preferably 50 mass% or more. This is because the higher the mixing ratio of the Liberica coffee beans in the raw material coffee beans, the stronger the musty smell from Liberica coffee beans in the extract obtained, so that the musty smell reducing effect of the present invention can be felt more. It is also because the higher the mixing ratio of the Liberica coffee beans in the raw material coffee beans, the more clearly the characteristic aroma of Liberica coffee beans can be felt. Preferably, the raw material coffee beans include 100 mass% or less Liberica coffee beans. The upper limit and the lower limit of the mixing ratio of the Liberica coffee beans in the raw material coffee beans can be appropriately combined. In one embodiment, the proportion of the Liberica coffee beans in the raw material coffee beans is preferably 1 mass% or more, preferably 1 to 100 mass%, more preferably 10 to 100 mass%, still more preferably 20 to 100 mass%, particularly preferably 50 to 100 mass%.

Preferably, in the coffee bean extract of the present invention, the soluble solids include Liberica coffee bean-derived soluble solids, and the Liberica coffee bean-derived soluble solids content of the coffee bean extract is more than 0.0001 mass%. It is because when the Liberica coffee bean-derived soluble solids content of the coffee bean extract is 0.0001 mass% or less, the Liberica coffee bean-derived isovaleric acid content of the extract is low and thus no musty smell may be produced. The Liberica coffee bean-derived soluble solids content of the coffee bean extract of the present invention is more preferably 0.001 mass% or more, still more preferably 0.01 mass% or more, yet still more preferably 0.02 mass% or more. The upper limit of the Liberica coffee bean-derived soluble solids content of the coffee bean extract of the present invention is not limited. For example, the upper limit is preferably 1 mass% or less, more preferably 0.8 mass% or less, still more preferably 0.5 mass% or less.

In one embodiment, the Liberica coffee bean-derived soluble solids content of the coffee bean extract is preferably more than 0.0001 mass% and 1 mass% or less, more preferably 0.001 to 1 mass%, still more preferably 0.01 to 0.8 mass%, particularly preferably 0.02 to 0.5 mass%.

In the present invention, preferably, the isovaleric acid content per Liberica coffee bean-derived soluble solids is less than 10 ppm. In order to further effectively reduce the musty smell, the isovaleric acid content per Liberica coffee bean-derived soluble solids is preferably 8 ppm or less, more preferably 7 ppm or less, more preferably 6.5 ppm or less, more preferably 3 ppm or less, still more preferably 2 ppm or less, yet still more preferably 1.5 ppm or less, yet still more preferably 1.3 ppm or less, yet still more preferably 1.285 ppm or less, particularly preferably 1 ppm or less. The lower limit of the isovaleric acid content per Liberica coffee bean-derived soluble solids is not limited. The lower limit may be 0 ppm or more, preferably more than 0 ppm.

In the present invention, the isovaleric acid content per Liberica coffee bean-derived soluble solids is preferably more than 0 ppm and less than 10 ppm, preferably more than 0 ppm and 8 ppm or less, more preferably more than 0 ppm and 7 ppm or less, more preferably more than 0 ppm and 6.5 ppm or less, more preferably more than 0 ppm and 3 ppm or less, still more preferably more than 0 ppm and 2 ppm or less, yet still more preferably more than 0 ppm and 1.5 ppm or less, yet still more preferably more than 0 ppm and 1.3 ppm or less, yet still more preferably more than 0 ppm and 1.285 or less, particularly preferably more than 0 ppm and 1 ppm or less.

Preferably, the coffee bean extract of the present invention contains a Liberica coffee bean extract in which the isovaleric acid content per soluble solids is in the above range.

Isovaleric acid is a degradant of the compound represented by the above formula (1). Thus, when a coffee bean extract from coffee beans including Liberica coffee beans or an aqueous solution of the coffee bean extract containing 0.3 mass% soluble solids is diluted in half with ethanol and subjected to LC-MS analysis using 99 ppm xanthohumol as an internal standard, if the ratio of the area value at m/z 727.35 of the compound (I) to the area value at m/z 353.30 of xanthohumol is 0.11 or greater, it means that the isovaleric acid content per soluble solids is higher in such a coffee bean extract or an aqueous solution than in a coffee bean extract from coffee beans not including Liberica coffee beans. However, as disclosed in EXAMPLES described later, in the coffee bean extract of the present invention, the isovaleric acid content per soluble solids is reduced to less than 10 ppm even when the amount of the compound (I) per soluble solids in the coffee bean extract is the same as that in conventional dripped coffee obtained from coffee beans including Liberica coffee beans. In other words, the coffee bean extract of the present invention is a coffee bean extract in which the characteristic musty smell of Liberica coffee beans is reduced and the characteristic aroma of Liberica coffee beans can be effectively felt.

The coffee bean extract of the present invention may be any of the followings: a liquid coffee bean extract from coffee beans with an aqueous solvent; a concentrated liquid obtained by concentrating the liquid coffee bean extract (coffee concentrate); a diluted solution of the liquid coffee bean extract; or a dried product obtained by drying the liquid coffee bean extract. The coffee bean extract may be in liquid form, solid form such as a powder, slurry form, or gel form.

The soluble solids content of the coffee bean extract of the present invention is not limited. For example, preferably, it is 0.1 to 80 mass% (0.1 to 80% Brix). For example, when the coffee bean extract is a liquid coffee bean extract or a concentrated liquid thereof, the soluble solids content is preferably 0.1 to 80 mass%, more preferably 0.1 to 40 mass%.

Herein, the soluble solids content (mass%) of each of samples of a coffee bean extract, a food or beverage containing the coffee bean extract, a beverage in a sealed container, and the like is indicated by the sugar refractometer reading (Brix) at 20°C. The amount (g) of soluble solids in a sample is a value determined by multiplying the sugar refractometer reading (Brix) of the sample at 20°C by the amount (g) of the sample. When the Brix of the sample cannot be measured directly (for example, when the sample is a solid, gel, slurry, or the like), the sample is dissolved in water at a concentration of 1 mass%. The soluble solids can be determined from the Brix of the solution at 20°C.

The soluble solids may be coffee bean-derived soluble solids and may include a component not derived from coffee beans.

The amount of each component such as isovaleric acid per soluble solids can be calculated by measuring the amount of each component in the sample and converting the amount into the amount per soluble solids content of the sample.

### <Method of producing coffee bean extract>

The coffee bean extract of the present invention can be produced, for example, by bringing coffee beans including Liberica coffee beans into contact with an aqueous solvent for extraction. The liquid coffee bean extract obtained by extraction may be used directly as a coffee bean extract, or may be subjected to one or more treatments as needed, such as pre-treatment of green beans, aroma removal treatment, concentration treatment, and drying treatment.

The term "coffee beans" refers to seeds taken out from *Coffea* fruits. The cultivated tree species and the production area are not limited. Examples of the cultivated coffee species include *Coffea arabica* and *Coffea robusta* in addition to *Coffea liberica.* Examples of the production area or type of the coffee beans include mocha, Brazil, Colombia, Guatemala, Blue Mountain, Kona, Mandheling, Kilimanjaro, Mexico, Ethiopia, Jamaica, and Geisha. The coffee bean extract of the present invention is not limited as long as it is extracted from coffee beans including Liberica coffee beans. The raw material coffee beans may include coffee beans of a species different from Liberica coffee beans. In other words, the coffee bean extract of the present invention may be one extracted from coffee beans including only Liberica coffee beans or may be one extracted from coffee beans in which Liberica coffee beans are blended with coffee beans of a species different from Liberica coffee beans. The coffee bean extract including Liberica coffee beans also includes a mixture of Liberica coffee bean extract and an extract from coffee beans different from Liberica coffee beans.

The proportion of Liberica coffee beans for use in production of the coffee bean extract is preferably 1 to 100 mass%, more preferably 10 to 100 mass%, still more preferably 20 to 100 mass%, yet still more preferably 50 to 100 mass%.

The raw material coffee beans of the coffee bean extract of the present invention may be seeds of ripe fruits *Coffea* or seeds of unripe fruits *Coffea.* Use of ripe fruit seeds is preferred in terms of the flavor of the coffee bean extract.

The coffee beans may be green beans (green coffee) or roasted coffee beans. Use of roasted coffee beans is preferred in order to enhance the flavor of the coffee bean extract. Preferably, the coffee bean extract of the present invention is a roasted coffee bean extract.

### (Roasting)

The coffee beans may be roasted by any roasting method. Any known method such as open fire roasting, hot-air roasting, or semi-hot-air roasting can be appropriately selected. The roasting temperature is also not limited but is preferably 100°C to 300°C, more preferably 150°C to 250°C. Generally, the chromaticity of the beans (Hunter L-value, hereinafter simply referred to as "L-value") is used as the indicator of the roasting degree of coffee beans. For example, the roasting degree in terms of L-value may be set to 15 to 30. In order to enhance the characteristic aroma of *Coffea liberica* in the coffee bean extract of the present invention, the roasting degree in terms of L-value is preferably 17 to 27, more preferably 19 to 25. The L-value represents the brightness of roasted coffee beans, which is measured using a color-difference meter, with black defined as an L-value of 0 and white as an L-vale of 100. The roasted coffee beans may be a mixture of coffee beans having different roasting degrees. In this case, preferably, these coffee beans are combined in such a manner that the average L-value is in the above range. The average L-value is determined as the sum of values each obtained by multiplying the L-value of roasted coffee beans for use by the content ratio of the roasted coffee beans. Herein, for example, the L-value is measured by the following method.

### (Method of measuring L-value)

Using a coffee grinder (BONMAC Coffee Mill BM-250N (Lucky Coffee Machine Co., Ltd.)), coffee roasted beans are ground to a medium grind size. The ground beans are placed and levelled in a Petri dish, and an L-value meter (Chroma Meter CR-410 (Konica Minolta, Inc.)) is overlaid on the levelled surface to measure the L-value.

The coffee beans (roasted coffee beans or green beans) may or may not be ground but are preferably ground before the extraction step of extracting an essence in order to increase the extraction efficiency of soluble solids. The coffee beans can be ground using a common grinder such as a roll mill. The grinding particle size is not limited. The coffee beans can be ground to have any particle size and any shape by coarse grinding, medium grinding, medium-fine grinding, fine grinding, or the like. In order to increase the extraction efficiency of soluble solids, the ground coffee beans obtained by the grinding step may be steamed with water or steam (steaming step). The steaming step can be carried out at any time before the extraction step. For example, the steaming step may be carried out immediately after the grinding step or may be carried out after filling an extraction machine with the ground coffee beans. The duration of the steaming step can be suitably set.

### (Extraction)

The coffee beans may be extracted by any extraction method, as long as coffee soluble solids can be extracted. Examples of the extraction method include drip extraction, kneader extraction, supercritical CO₂ extraction, continuous multi-tube extraction, and immersion extraction. Preferred are continuous multi-tube extraction, kneader extraction, and the like. Generally, an aqueous solvent at 40°C to 200°C is brought into contact with coffee beans (roasted coffee beans or green beans) or ground coffee beans, whereby an aqueous solution in which coffee soluble solids are dissolved, i.e., an essence, is produced. The duration of extraction may be suitably set according to the extraction method but is preferably 10 seconds to 120 minutes, more preferably 5 to 90 minutes, still more preferably 5 to 60 minutes, particularly preferably 5 to 30 minutes.

Examples of the aqueous solvent include water, alcohol aqueous solution, and milk. Of these, water is preferred.

The pH (20°C) of the aqueous solvent is, for example, preferably 4 to 10, more preferably 5 to 7. The pH of the aqueous solvent may be appropriately adjusted by adding a pH adjuster (e.g., sodium bicarbonate, L-ascorbic acid, or sodium L-ascorbate) thereto.

The amount of the aqueous solvent used is preferably 1 to 20 times, more preferably 2 to 15 times, still more preferably 3 to 10 times the amount of the coffee beans in terms of mass ratio.

The temperature of the aqueous solvent for use in extraction is preferably 40°C to 200°C, more preferably 110°C to 190°C. Still more preferably, the temperature is set to 110°C to 180°C, 120°C to 190°C, or the like according to the extraction method.

Of the extraction methods described above, continuous multi-tube extraction is suitable because isovaleric acid content in the coffee bean extract is effectively reduced. Regarding extraction conditions for continuous multi-tube extraction, the temperature of an aqueous solvent used for extraction is preferably 110°C to 180°C, more preferably 130°C to 180°C, still more preferably 150°C to 180°C.

The liquid coffee bean extract obtained by extraction can be used directly as the coffee bean extract but is preferably subjected to, for example, aroma removal treatment, concentration treatment, or the like, because the isovaleric acid content per soluble solids is further reduced and the musty smell is further reduced in the resulting coffee bean extract. For example, in producing a coffee bean extract using coffee beans including Liberica coffee beans, preferably, the liquid coffee bean extract obtained by extraction is subjected to the aroma removal treatment and/or the concentration treatment. The order of the aroma removal treatment and the concentration treatment is not limited.

### (Aroma removal treatment)

The method of producing the coffee bean extract can further include an aroma removal treatment step of removing aroma from the liquid coffee bean extract obtained by extraction. The aroma removal treatment can further reduce the isovaleric acid content of the liquid coffee bean extract obtained by extraction. The aroma removal treatment may be carried out by any method as long as the aromatic component can be separated from the liquid coffee bean extract. For example, steam distillation, plate column distillation (tray distillation), and treatment using an aroma removing device or the like can be mentioned. Generally, the removed aroma fraction does not contain coffee soluble solids, so that the soluble solids (Brix) content is low. In a general method of producing a coffee bean extract, an aroma fraction is sometimes mixed with a coffee bean extract at any subsequent stage. However, in the coffee bean extract of the production method of the present invention, preferably, the aroma fraction is not mixed with the coffee bean extract at any subsequent stage, because the aroma fraction contains isovaleric acid.

In the case of mixing the coffee bean extract with the aroma fraction at any subsequent stage, preferably, the amount of the aroma fraction to be mixed with the coffee bean extract is small.

### (Concentration treatment)

The method of producing a coffee bean extract can further include a concentration treatment step of concentrating a liquid coffee bean extract obtained by extraction. The concentration treatment enhances the characteristic aroma of Liberica coffee beans in the resulting coffee bean extract.

The liquid coffee bean extract obtained by extraction can be concentrated by any method, such as thermal concentration, freeze concentration, evaporative concentration, or membrane concentration. Preferably, the extracted coffee bean essence that underwent the concentration treatment step has a soluble solids concentration that is at least 1.1 times the concentration of the liquid coffee bean extract before the concentration treatment.

If necessary, the coffee bean extract of the present invention may be diluted, concentrated, or dried before use. Any known concentration method such as a normal pressure concentration method, a vacuum concentration method, or a membrane concentration method can be used. In the case of drying, a known method such as spray drying or freeze drying can be used.

The coffee bean extract of the present invention obtained by the above method can be directly used in various types of food or beverages. Particularly preferably, the coffee bean extract of the present invention is used to provide a coffee beverage, instant coffee, or coffee concentrate. The coffee bean extract of the present invention can be used as a food or beverage by itself, such as a coffee beverage, a coffee concentrate, or instant coffee, or may be used as a raw material of these food or beverages. The coffee bean extract of the present invention is also preferably used as an aroma-imparting composition. The coffee bean extract of the present invention is useful in imparting the characteristic aroma of Liberica coffee beans because isovaleric acid content that causes the musty smell is reduced in the coffee bean extract.

The method of producing a coffee bean extract is one embodiment of the present invention. The production method of the present invention is a method of producing a coffee bean extract, the method including: a roasting step of roasting coffee beans including Liberica coffee beans to obtain roasted coffee beans; an extraction step of obtaining an extract from the roasted coffee beans with water; and an isovaleric acid reduction step of reducing the isovaleric acid content per soluble solids to less than 10 ppm in the extract obtained.

As described above, the isovaleric acid content per soluble solids is reduced in the extract obtained by the extraction step, aroma removal treatment, concentration treatment, drying treatment, and the like. Thus, in the production method of the present invention, preferably, the isovaleric acid reduction step is carried out in at least one step selected from the group consisting of the extraction step, the aroma removal treatment, the concentration treatment, and the drying treatment. More preferably, the isovaleric acid reduction step is carried out in at least one step selected from the group consisting of the extraction step, the aroma removal treatment, and the concentration treatment. Still more preferably, the isovaleric acid reduction step is carried out in the extraction step and/or the aroma removal treatment.

### <Food or beverage containing coffee bean extract>

The present invention also encompasses a food or beverage containing the coffee bean extract of the present invention described above and having an isovaleric acid content per soluble solids of less than 10 ppm. The coffee bean extract of the present invention can be directly used as a food or beverage. If desired, the coffee bean extract can be blended with other components to provide a food or beverage.

The food or beverage is preferably a coffee beverage, instant coffee (soluble coffee), or coffee concentrate, more preferably a coffee beverage. The food or beverage is not limited to those mentioned above. Examples also include beverages such as alcoholic beverages and non-alcoholic beverages. Examples of the alcoholic beverages include beer, shochu highballs, liqueurs, and cocktails. Examples of the non-alcoholic beverages include carbonated beverages, flavored water, tea beverages, beverages containing fruit juice, beverages with no fruit juice, non-alcoholic beer-flavored beverages, malt beverages, soy milk, lactic acid bacteria beverages, cocoa, sports drinks, and nutrition drinks. Examples of the food or beverage include general foods, health foods, and foods with function claims. Preferably, the food or beverage of the present invention is a beverage.

As described above, when a food or beverage has an isovaleric acid content per soluble solids of less than 10 ppm, the musty smell from the coffee bean extract in the food or beverage is reduced, which can improve the flavor of the food or beverage. In order to further reduce the musty smell, in the food or beverage, the isovaleric acid content per soluble solids is preferably 8 ppm or less, more preferably 7 ppm or less, more preferably 6.5 ppm or less, more preferably 3 ppm or less, still more preferably 2 ppm or less, yet still more preferably 1.5 ppm or less, yet still more preferably 1.3 ppm or less, yet still more preferably 1.285 ppm or less, particularly preferably 1 ppm or less. In one embodiment, in the food or beverage, the isovaleric acid content per soluble solids may be 0 ppm or more, preferably more than 0 ppm and less than 10 ppm, preferably more than 0 ppm and 8 ppm or less, more preferably more than 0 ppm and 7 ppm or less, more preferably more than 0 ppm and 6.5 ppm or less, more preferably more than 0 ppm and 3 ppm or less, still more preferably more than 0 ppm and 2 ppm or less, yet still more preferably more than 0 ppm and 1.5 ppm or less, yet still more preferably more than 0 ppm and 1.3 ppm or less, yet still more preferably more than 0 ppm and 1.285 ppm or less, particularly preferably more than 0 ppm and 1 ppm or less.

Preferably, the food or beverage contains 0.01 to 80 mass% soluble solids. For example, the isovaleric acid content of the food or beverage is preferably 13 ppm or less, more preferably 8.5 ppm or less, still more preferably 1.7 ppm or less. Preferably, the isovaleric acid content of the food or beverage is more than 0 ppm. In one embodiment, preferably, the food or beverage of the present invention is one in which the isovaleric acid content of the food or beverage is adjusted to fall within the above range.

Preferably, the Liberica coffee bean-derived soluble solids content of the food or beverage is more than 0.0001 mass%. It is because when the Liberica coffee bean-derived soluble solids content of the food or beverage is 0.0001 mass% or less, the Liberica coffee bean-derived isovaleric acid content of the food or beverage is low and thus no musty smell may be produced. The Liberica coffee bean-derived soluble solids content of the food or beverage of the present invention is more preferably 0.001 mass% or more, still more preferably, 0.01 mass% or more, yet still more preferably 0.02 mass% or more. The upper limit of the Liberica coffee bean-derived soluble solids content of the food or beverage of the present invention is not limited. For example, the upper limit is preferably 1 mass% or less, more preferably 0.8 mass% or less, still more preferably 0.5 mass% or less. In one embodiment, the Liberica coffee bean-derived soluble solids content of the food or beverage is preferably more than 0.0001 mass% and 1 mass% or less, more preferably 0.001 to 1 mass%, still more preferably 0.01 to 0.8 mass%, particularly preferably 0.02 to 0.5 mass%.

The food or beverage of the present invention may be produced by any production method as long as the isovaleric acid content per soluble solids is less than 10 ppm in the food or beverage. For example, the coffee bean extract of the present invention can be directly provided as a food or beverage, or the coffee bean extract of the present invention can be appropriately added during food or beverage production to produce a food or beverage containing the coffee bean extract of the present invention and having an isovaleric acid content per soluble solids of less than 10 ppm.

The coffee bean extract content of the food or beverage is not limited. For example, the coffee bean extract content of the food or beverage can be 0.001 to 100 mass%, preferably 0.1 to 10 mass%. The coffee bean extract includes the coffee bean extract of the present invention described above, and preferred embodiments of the coffee bean extract of the present invention in the food or beverage are as described above.

A coffee beverage, instant coffee, and a coffee concentrate are described below as examples of preferred embodiments of the food or beverage of the present invention.

### <Coffee beverage>

An example of preferred embodiments of the present invention is a coffee beverage having an isovaleric acid content (concentration) per soluble solids of less than 10 ppm. The musty smell is reduced in the coffee beverage having an isovaleric acid content (concentration) per soluble solids of less than 10 ppm. Preferably, the coffee beverage of the present invention contains 0.1 to 10 mass% soluble solids. The isovaleric acid content of the coffee beverage is preferably less than 100 ppm, more preferably 10 ppm or less, still more preferably less than 10 ppm, particularly preferably 1 ppm or less. Preferably, the coffee beverage of the present invention is one in which the isovaleric acid content of the beverage is adjusted to fall within the above range.

The lower limit of the isovaleric acid content of the coffee beverage is not limited but is preferably more than 0 ppm. In one embodiment, the isovaleric acid content of the coffee beverage is preferably 0 ppm or more and less than 100 ppm, more preferably more than 0 ppm and less than 100 ppm, still more preferably more than 0 ppm and 10 ppm or less, yet still more preferably more than 0 ppm and less than 10 ppm, particularly preferably more than 0 ppm and 1 ppm or less.

Isovaleric acid in the coffee beverage of the present invention is preferably isovaleric acid derived from coffee beans including Liberica coffee beans.

The coffee beverage of the present invention preferably has a pH at 20°C of 3 to 10, more preferably 5 to 7. The pH in the above range is preferred because the taste of the coffee is not impaired.

The soluble solids content of the coffee beverage of the present invention is preferably 0.1 to 10 mass%, more preferably 0.5 to 5 mass%, still more preferably 0.7 to 3 mass%.

The coffee beverage may be produced by any production method as long as the isovaleric acid content per soluble solids is less than 10 ppm. The coffee beverage can be prepared, for example, by concentrating or diluting the coffee bean extract of the present invention described above with a liquid such as water as needed. The coffee beverage can also be produced, for example, by adding the coffee bean extract of the present invention to a coffee liquid such as a liquid of a roasted coffee bean extract from common roasted coffee beans, an aqueous solution of instant coffee, or a coffee concentrate. The coffee bean extract of the present invention and preferred embodiments thereof are as described above.

If desired, the coffee beverage can be appropriately blended with additives such as milk-based products (e.g., milk or dairy products), sweeteners (e.g., sucrose, isomerized sugar, glucose, fructose, lactose, and maltose), antioxidants, emulsifiers, and flavoring or masking agents.

The coffee beverage may be in any form, but it is preferably a beverage in a sealed container. Any container may be used for the beverage in a sealed container. Any commonly used container such as a container made of metal, resin, paper, glass, or the like can be used. Specific examples include metal containers such as aluminum cans and stainless-steel cans; containers made of resin such as plastic PET bottles; paper containers such as drink cartons; and glass containers such as glass bottles.

The beverage in a sealed container can be produced in a usual manner using a coffee beverage. In the case of a beverage in a sealed container, sterilization before or after filling a container with the coffee beverage is preferred to allow long term storage. The method and conditions of sterilization may be appropriately selected from methods and conditions commonly used for sterilization of coffee beverages.

The coffee beverage in a sealed container may be a black coffee beverage in a sealed container or a milk coffee beverage in a sealed container.

A coffee beverage after production may be concentrated to provide a coffee concentrate or may be dried and solidified by means such as freeze drying or spray drying to provide coffee in solid form such as instant coffee. Such a coffee concentrate and coffee in solid form are advantageous in terms of storage and transportation. The coffee beverage of the present invention can be enjoyed easily by diluting or dissolving such a coffee concentrate and coffee in solid form with an appropriate amount of liquid such as water or milk according to the degree of concentration level thereof.

### <Coffee concentrate and instant coffee>

A coffee concentrate and instant coffee each having an isovaleric acid content per soluble solids of less than 10 ppm are examples of preferred embodiments of the present invention.

Instant coffee is in powder or granular form, usually having a moisture content of 5 mass% or less and containing more than 95% soluble solids. It is reduced with a liquid such as water or milk at the time of drinking. Porous instant coffee is preferred.

The coffee concentrate is a concentrate of a liquid coffee bean extract. The coffee concentrate usually has a higher soluble solids content than coffee beverages for general drinking. For example, the coffee concentrate is preferably one containing soluble solids of more than 10 mass% and 80 mass% or less, more preferably more than 10 mass% and 40 mass% or less.

A coffee concentrate in liquid form is preferred. The coffee concentrate in liquid form can be provided as a diluted beverage that is dispensed in portions (beverage for dilution). The coffee concentrate can be used directly or diluted with water or the like as needed for drinking or ingestion.

When instant coffee or a coffee concentrate has an isovaleric acid content per soluble solids of less than 10 ppm, the musty smell of the instant coffee or the coffee concentrate is reduced.

The instant coffee or the coffee concentrate having an isovaleric acid content per soluble solids of less than 10 ppm can be obtained, for example, by subjecting the coffee bean extract of the present invention to the aroma removal treatment and/or the concentration treatment as needed and then further subjecting the same to the drying treatment or additional concentration treatment. The instant coffee or the coffee concentrate can also be produced by subjecting the coffee beverage described above to the drying treatment or the concentration treatment. Drying treatment conditions and concentration conditions can be suitably selected. The coffee bean extract and the coffee beverage of the present invention and preferred embodiments thereof are as described above.

The instant coffee having an isovaleric acid content per soluble solids of less than 10 ppm can be obtained, for example, by drying the coffee bean extract of the present invention or the coffee beverage of the present invention. The coffee bean extract and the coffee beverage of the present invention and preferred embodiments thereof are as described above. Examples of the drying method include spray drying and freeze drying.

If desired, the instant coffee and coffee concentrate each can be appropriately blended with the above-described additives such as milk-based products, sweeteners, antioxidants, emulsifiers, and flavoring or masking agents.

The instant coffee and the coffee concentrate each have an isovaleric acid content per soluble solids of less than 10 ppm. Yet, in one embodiment, preferably, the isovaleric acid content of each of the instant coffee and the coffee concentrate is appropriately set such that the isovaleric acid content of the beverage is less than 100 ppm when provided in the form for drinking or ingestion.

For example, in the case of instant coffee, preferably, the isovaleric acid content of the instant coffee is appropriately set such that the isovaleric acid content of an instant coffee solution (instant coffee solution at the time of drinking) obtained by reducing the instant coffee with a liquid such as water or milk is less than 100 ppm.

When diluting the coffee concentrate for drinking, preferably, the isovaleric acid content of the coffee concentrate is appropriately adjusted such that a diluted solution (diluted solution of the coffee concentrate at the time of drinking) has an isovaleric acid content of less than 100 ppm.

Preferably, a diluted solution of the coffee concentrate or an instant coffee solution at the time of drinking or ingestion has an isovaleric acid content of less than 100 ppm, because the musty smell of isovaleric acid in the solution and the diluted solution is reduced.

### <Aroma-imparting composition>

When the coffee bean extract of the present invention is added to a food or beverage, the characteristic aroma of Liberica coffee beans having a less musty smell of isovaleric acid can be enhanced or imparted to the food or beverage. Thus, the coffee bean extract of the present invention can be used as an aroma-imparting composition.

The aroma-imparting composition of the present invention may be made of the coffee bean extract described above and may contain other components if desired. The aroma-imparting composition of the present invention is suitably used to improve the aroma of food or beverages. The amount of the aroma-imparting composition of the present invention used is not limited and can be appropriately selected according to the type of food or beverage and purpose.

The aroma-imparting composition of the present invention may be added to any food or beverage and can be added to beverages such as the alcoholic beverages and the non-alcoholic beverage described above, general foods, health foods, and foods with function claims. Of these, beverages such as coffee beverages, instant coffee, and coffee concentrates are preferred.

The aroma-imparting composition of the present invention is suitably used to enhance or impart the characteristic aroma of Liberica coffee beans having a less musty smell to, for example, coffee beverages, instant coffee, coffee concentrates, and the like. The aroma-imparting composition of the present invention is also suitably used to enhance or impart the characteristic aroma of Liberica coffee beans having a less musty smell to, for example, alcoholic beverages such as beer, shochu highballs, liqueurs, cocktails; beverages such as coffee beverages, carbonated beverages, flavored water, beverages without fruit juice, non-alcoholic beer-flavored beverages, malt beverages, soy milk, lactic acid bacteria beverages, cocoa, sports drinks, and nutrition drinks; confectioneries such as jelly, cookies, chocolates, pudding, Bavarian cream, ice cream, sorbet, cake, candies, yokan, chewing gum, ramune sweets, manju, and mochi sweets; and food or beverages such as bread.

The aroma-imparting composition of the present invention may contain other components in addition to the coffee bean extract of the present invention, such as sweeteners (e.g., sucrose, isomerized sugar, glucose, fructose, lactose, and maltose). In the present invention, the coffee bean extract content of the aroma-imparting composition is not limited. For example, it is preferably 50 to 100 mass%, more preferably 60 to 95 mass%.

### <Beverage in sealed container>

The beverage in a sealed container of the present invention is a beverage in a sealed container containing a coffee bean extract from coffee beans including Liberica coffee beans, wherein the isovaleric acid content per soluble solids is less than 10 ppm. As described above, Liberica coffee beans are characterized by its strong musty smell. The beverage in a sealed container of the present invention contains a coffee bean extract from coffee beans including Liberica coffee beans with a less musty smell and an improved flavor. Thus, the beverage has a less musty smell and an improved flavor. In the beverage in a sealed container of the present invention, the isovaleric acid content per soluble solids is preferably 8 ppm or less, more preferably 7 ppm or less, more preferably 6.5 ppm or less, more preferably 3 ppm or less, still more preferably 2 ppm or less, yet still more preferably 1.5 ppm or less, yet still more preferably 1.3 ppm or less, yet still more preferably 1.285 ppm or less, particularly preferably 1 ppm or less. Preferably, the isovaleric acid content per soluble solids is 0 ppm or more, preferably more than 0 ppm in the beverage in a sealed container. In one embodiment, in the beverage in a sealed container, the isovaleric acid content per soluble solids is preferably more than 0 ppm and less than 10 ppm, preferably more than 0 ppm and 8 ppm or less, more preferably more than 0 ppm and 7 ppm or less, more preferably more than 0 ppm and 6.5 ppm or less, more preferably more than 0 ppm and 3 ppm or less, still more preferably more than 0 ppm and 2 ppm or less, yet still more preferably more than 0 ppm and 1.5 ppm or less, yet still more preferably more than 0 ppm and 1.3 ppm or less, yet still more preferably more than 0 ppm and 1.285 ppm or less, particularly preferably more than 0 ppm and 1 ppm or less.

Preferably, the coffee bean extract in the beverage in a sealed container of the present invention is the coffee bean extract of the present invention. Preferred embodiments of the coffee bean extract of the present invention are as described above, and can include the preferred embodiments of the coffee bean extract contained in the beverage in a sealed container of the present invention.

The beverage for the beverage in a sealed container of the present invention may be the food or beverage of the present invention, with a coffee beverage being preferred. Preferred embodiments of the food or beverage of the present invention are as described above, and can include the preferred embodiments of the beverage for the beverage in a sealed container of the present invention.

Any container may be used for the beverage in a sealed container. Any commonly used container such as a container made of metal, resin, paper, glass, or the like can be used. Specific examples include metal containers such as aluminum cans and stainless-steel cans; containers made of resin such as plastic PET bottles; paper containers such as drink cartons; and glass containers such as glass bottles.

The numerical range defined by the lower limit and the upper limit herein, i.e., "the lower limit to the upper limit", includes the lower limit and the upper limit. For example, the range defined by "1 to 2" means 1 or more and 2 or less, with 1 and 2 being inclusive. Herein, the range may be any combination of any upper limit and any lower limit.

All academic literature and patent literature cited herein are incorporated herein by reference.

### EXAMPLES

The present invention is described in further detail below with reference to examples. The present invention is not limited to these examples. In the examples, "ppm" means "mass ppm".

### <Method of measuring solids>

The sugar refractometer reading (Brix) at 20°C calculated using a digital refractometer RF-5000α (available from Atago Co., Ltd.) was regarded as the soluble solids content (concentration).

### <Comparative Example 1: Drip-extracted liquid>

Excelsa (a variant of *Coffee liberica)* green coffee beans were roasted using a roasting machine, whereby roasted coffee beans with an L-value of 24 were obtained. The roasted coffee beans were ground using a grinder (available from De'Longhi), whereby ground roasted beans were obtained. The ground roasted beans (10 g) were placed in a paper filter for a dripper and drip-extracted with 150 mL hot water (90°C), whereby an extracted coffee bean essence according to Comparative Example 1 was obtained.

### <Examples 1: Essence obtained by continuous multi-tube extraction>

Excelsa (a variant of *Coffee liberica)* green coffee beans were roasted using a roasting machine, whereby roasted coffee beans with an L-value of 24 were obtained. The roasted coffee beans were ground using a roll mill grinder. After grinding, coffee soluble solids were extracted at a maximum extraction temperature of 180°C using a continuous multi-tube extraction machine. The ground beans were introduced in an amount of 5.4 kg per column, and extraction was continued until a liquid extract in a predetermined amount was obtained, whereby a liquid extract in an amount of 38 kg (in terms of liquid volume) per column was obtained. The liquid extract was cooled using a plate heat exchanger. After cooling, the liquid extract was centrifuged using a centrifuge (centrifuged at a supply flow rate of 14 L/h), whereby insoluble matter was removed. The moisture in the resulting supernatant liquid (liquid extract from which the insoluble matter was removed) was vaporized using a centrifugal thin film vacuum evaporator (available from Ookawara Manufacturing, Co., Ltd.) at a temperature of about 50°C to 60°C to concentrate the residual coffee liquid (liquid containing coffee soluble solids), whereby an extracted coffee bean essence according to Example 1 was obtained.

### <Example 2 and Example 3: Essene obtained by continuous multi-tube extraction and evaporative concentration treatment>

Excelsa (a variant of *Coffee liberica)* green coffee beans were roasted using a roasting machine, whereby roasted coffee beans with an L-value of 24 were obtained. The roasted coffee beans were ground using a roll mill grinder. After grinding, coffee soluble solids were extracted at a maximum extraction temperature of 180°C using a continuous multi-tube extraction machine. The ground beans were introduced in an amount of 5.4 kg per column, and extraction was continued until a liquid extract in a predetermined amount was obtained, whereby a liquid extract in an amount of 38 kg (in terms of liquid volume) per column was obtained. The liquid extract was cooled using a plate heat exchanger. After cooling, the liquid extract was centrifuged using a centrifuge (centrifuged at a supply flow rate of 14 L/h), whereby insoluble matter was removed. Subsequently, the moisture in the resulting supernatant liquid (liquid extract from which the insoluble matter was removed) was vaporized using a centrifugal thin film vacuum evaporator (available from Ookawara Manufacturing, Co., Ltd.) at a temperature of about 50°C to 60°C to concentrate the residual coffee liquid (liquid containing coffee soluble solids), whereby an extracted coffee bean essence according to Example 2 was obtained.

The extracted coffee bean essence according to Example 2 was sterilized (at 90°C for 30 sec), whereby an extracted coffee bean essence according to Example 3 was obtained.

### <Example 4 and Example 5: Essence obtained by continuous multi-tube extraction and aroma removal>

Excelsa (a variant of *Coffee liberica)* green coffee beans were roasted using a roasting machine, whereby roasted coffee beans with an L-value of 24 were obtained. The roasted coffee beans were ground using a roll mill grinder. After grinding, coffee soluble solids were extracted at a maximum extraction temperature of 180°C using a continuous multi-tube extraction machine. The ground beans were introduced in an amount of 5.4 kg per column, and extraction was continued until a liquid extract in a predetermined amount was obtained, whereby a liquid extract in an amount of 38 kg (in terms of liquid volume) per column was obtained. The liquid extract was cooled using a plate heat exchanger. Subsequently, the total amount of the liquid extract was treated with an aroma removing device (Spinning Cone Column, available from Masuda Food Machinery Co., Ltd.), whereby the aroma was removed. Further, the residual coffee liquid after the aroma removal treatment was centrifuged using a centrifuge (centrifuged at a supply flow rate of 14 L/h), whereby insoluble matter was removed. Subsequently, the moisture in the resulting supernatant liquid (liquid extract from which the insoluble matter was removed) was vaporized using a centrifugal thin film vacuum evaporator (available from Ookawara Manufacturing, Co., Ltd.) at a temperature of about 50°C to 60°C to concentrate the residual coffee liquid (liquid containing coffee soluble solids), whereby an extracted coffee bean essence according to Example 4 was obtained.

The extracted coffee bean essence according to Example 4 was sterilized (at 90°C for 30 sec), whereby an extracted coffee bean essence according to Example 5 was obtained.

### <Example 6 and Example 7: Blended essence in which essence obtained by continuous multi-tube extraction and aroma removal is mixed with aroma removed by separation>

Excelsa (a variant of *Coffee liberica)* green coffee beans were roasted using a roasting machine, whereby roasted coffee beans with an L-value of 24 were obtained. The roasted coffee beans were ground using a roll mill grinder. After grinding, coffee soluble solids were extracted at a maximum extraction temperature of 180°C using a continuous multi-tube extraction machine. The ground beans were introduced in an amount of 5.4 kg per column, and extraction was continued until a liquid extract in a predetermined amount was obtained, whereby a liquid extract in an amount of 38 kg (in terms of liquid volume) per column was obtained. The liquid extract was cooled using a plate heat exchanger. Subsequently, the total amount of the liquid extract was treated with an aroma removing device (Spinning Cone Column, available from Masuda Food Machinery Co., Ltd.), whereby the aroma was removed. Further, the residual coffee liquid after the aroma removal treatment was centrifuged using a centrifuge (centrifuged at a supply flow rate of 14 L/h), whereby insoluble matter was removed. Subsequently, the moisture in the resulting supernatant liquid (liquid extract from which the insoluble matter was removed) was vaporized using a centrifugal thin film vacuum evaporator (available from Ookawara Manufacturing, Co., Ltd.) at a temperature of about 50°C to 60°C to concentrate the residual coffee liquid (liquid containing coffee soluble solids). The concentrated coffee liquid was mixed with the aroma removed by separation, whereby an extracted coffee bean essence according to Example 6 was obtained.

The extracted coffee bean essence according to Example 6 was sterilized (at 90°C for 30 sec), whereby an extracted coffee bean essence according to Example 7 was obtained.

### (Measurement of isovaleric acid content per soluble solids in extracted coffee bean essence)

### (I) Preparation of internal standard substance

About 44 mg of acetic acid-d4 was weighed out. Water was added to make up the volume to 10 mL, and the mixture was diluted with water to a concentration of 200 µg/mL.

### (II) Pre-treatment of sample

(1) An internal standard solution (10 µL) was added to each 50-fold diluted sample (extracted coffee bean essence according to each of the comparative examples and the examples) (40 µL).
(2) Water (10 µL) was added to the mixture obtained in (1).
(3) Methanol (100 µL) was added to the mixture obtained in (2), followed by stirring.
(4) The product obtained in (3) was centrifuged using a centrifuge (10000 rpm, 5 min, 4°C), and the resulting supernatant (10 uL) was separated.
(5) To the supernatant obtained in (4) were added 50 mM 3-nitrophenylhydrazine, 50 mM N-(3-dimethylaminopropyl)-N'-ethylcarbodiimide, a 7.5% pyridine solution, and a 75% methanol solution each in an amount of 10 µL.
(6) The mixture obtained in (5) was protected from light and stirred at room temperature for 30 minutes.
(7) The product obtained in (6) was diluted 10-fold with a 75% methanol solution containing 0.5% formic acid, whereby a measurement solution was prepared.

The same procedure was performed using water instead of the sample, whereby a procedure blank sample (BL) was prepared.

Analysis conditions of the measurement solutions are as described below.

### <Conditions 1>

LC part: LC-30A system (Shimadzu Corporation)
MS part: LCMS-8060NX (Shimadzu Corporation)
Analytical column: Mastro C18 (2.0 mm × 100 mm, 3 um) Shimadzu GLC Ltd.
Mobile phase A: 0.1% formic acid aqueous solution
Mobile phase B: acetonitrile
Gradient conditions for mobile phase B:
   The gradient conditions are as described in Table 1 below.
Concentration: 16% → 30% (0 to 4 min), 30% (4 to 7 min), 30% → 95% (7 to 12 min), 95% (12 to 14 min), 95% → 16% (14 to 14.1 min), 16% (14.1 to 16 min) (mobile phase B
concentration: % (v/v))

**[Table 1]**

| Time (min) | 0.0 | 4.0 | 7.0 | 12.0 | 14.0 | 14.1 | 16.0 |
|---|---|---|---|---|---|---|---|
| B conc. (%) | 16 | 30 | 30 | 95 | 95 | 16 | 16 |

### (MS)

### Ionization mode: electrospray ionization (ESI)

Monitor ion conditions are as described in Table 2 below.

**[Table 2]**

| | | Quantifier ion | | Qualifier ion | |
|---|---|---|---|---|---|
| Compound | Polarity | Q1 (m/z) | Q3 (m/z) | Q1 (m/z) | Q3 (m/z) |
| Isovaleric acid | - | 236.00 | 152.10 | 236.00 | 137.15 |
| Acetic acid-d₄ | - | 196.95 | 137.05 | 196.95 | 152.15 |

### (Measurement of amount of compound (I) in extracted coffee bean essence (compound detected at m/z 727.35))

The extracted coffee bean essence obtained in each of the comparative examples and the examples was diluted with ultra-pure water to adjust the Brix to 0.3. Subsequently, filtration was performed using a 200-µm filter, whereby a sample for analysis was obtained. The sample for analysis was dispensed into microvials for high performance liquid chromatography, followed by LC-MS analysis (negative mode). In other words, the aqueous solution containing 0.3 mass% soluble solids (aqueous solution of the coffee bean extract) was subjected to LC-MS analysis in negative mode. Analysis conditions of LC-MS analysis are as described below.

### <Conditions 2>

### (LC)

Analytical column: Cadenza CD-C18 (3 mm × 150 mm, 3 um, available from Imtakt)
Column temperature: 40°C
Mobile phase A: 0.1% (v/v) formic acid aqueous solution
Mobile phase B: 0.1% (v/v) formic acid acetonitrile
Concentration gradient of mobile phase B:
   The concentration gradient of the mobile phase B is as described in Table 3 below.
Concentration: 50 (0 to 2 min), 5% → 60% (2 to 7.5 min), 60% → 100% (7.5 to 17 min), 100% (17 to 21 min), 100% → 5% (21 to 22 min), 5% (22 to 30 min) (mobile phase B
concentration: % (v/v))
Column flow rate: 0.2 mL/min

**[Table 3]**

| Time (min) | 0.0 | 2.0 | 7.5 | 17.0 | 21.0 | 22.0 | 30.0 |
|---|---|---|---|---|---|---|---|
| B conc. (%) | 5 | 5 | 60 | 100 | 100 | 5 | 5 |

### (MS)

Ionization method: negative mode
Spray voltage: 3.5 kV
Capillary temperature: 250°C
Capillary voltage: 49 V
Resolution: 70000 (MS, MS/MS)
MS scan width: m/z 80-1200
Collision energy: normalized to 15 to 45%

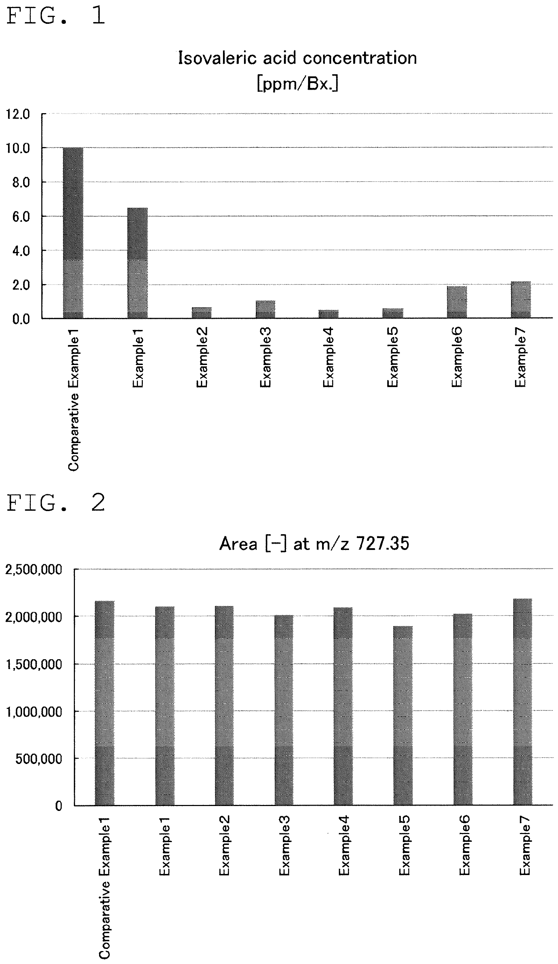

For each extracted coffee bean essence, Table 4 below shows the isovaleric acid content (concentration) (ppm/Brix) per soluble solids and the peak area value at m/z 727.35 (m/z is 727.35) (area value at m/z 727.35). For each extracted coffee bean essence, Table 4 below also shows the relative value (%) of the amount of the compound (the ratio of the amount of the compound at m/z 727.35 relative to Comparative Example 1), taking the amount of the compound (I) detected at m/z 727.35 in the extracted coffee bean essence according to Comparative Example 1 as 100%. The relative value was calculated from the peak area value at m/z 727.35. FIG. 1 shows the isovaleric acid content (concentration) (ppm/Brix.) per soluble solids in each extracted coffee bean essence. FIG. 2 is a graph showing the peak area value at m/z 727.35 of the extracted coffee bean essence according to each of Comparative Example 1 and Examples 1 to 7. The area values at m/z 727.35 shown in Table 4 and FIG. 2 are the peak area values at m/z 727.35 obtained by the LC-MS analysis described above.

**[Table 4]**

| | Soluble solids (Brix) [%] | Isovaleric acid concentration [ppm] | Isovaleric acid concentration per soluble solids [ppm/Brix] | Area value at m/z 727.35 | Ratio of amount of compound at m/z 727.35 relative to Comparative Example 1 [%] |
|---|---|---|---|---|---|
| Comparative Example 1 | 1.81 | 18.10 | 10.00 | 2161658.33 | 100.00 |
| Example 1 | 7.37 | 47.90 | 6.50 | 2102898.00 | 97.28 |
| Example 2 | 49.70 | 33.30 | 0.67 | 2110000.00 | 97.61 |
| Example 3 | 48.30 | 49.60 | 1.03 | 2012711.00 | 93.11 |
| Example 4 | 48.87 | 25.00 | 0.51 | 2092605.00 | 96.81 |
| Example 5 | 48.35 | 28.10 | 0.58 | 1893168.00 | 87.58 |
| Example 6 | 30.61 | 57.90 | 1.89 | 2022656.00 | 93.57 |
| Example 7 | 30.39 | 65.30 | 2.15 | 2184538.00 | 101.06 |

The isovaleric acid content per soluble solids was reduced in the extracted coffee bean essence by continuous multi-tube extraction. In addition, the isovaleric acid extracted coffe bean essence by the evaporative concentration treatment and the aroma removal treatment. None of the continuous multi-tube extraction, evaporative concentration treatment, and aroma removal treatment hardly changed the amount of the compound detected at m/z 727.35 per soluble solids in the extracted coffee bean essence, as compared to the amount of the compound in the drip-extracted liquid. Thus, in each of Examples 1 to 7, a coffee bean extract maintaining a characteristic aroma of Liberica coffee beans and having a less musty smell was obtained.

### <Sensory evaluation of food or beverage containing essence: Reference Examples 1-1 to 1-5>

The extracted coffee bean essence (drip-extracted essence having an isovaleric acid content per soluble solids of 10 ppm/Brix) according to Comparative Example 1 and an Arabica coffee essence (isovaleric acid concentration per soluble solids: 1.28 ppm/Brix) were mixed at a species ratio described in Table 5 below. The mixture was mixed with commercially available natural water (product name: Suntory Minami-Alps Natural Mineral Water, Suntory Beverage & Food Limited) to achieve a soluble solids content of 1 mass%, whereby beverage samples according to Reference Examples 1-1 to 1-5 were prepared. The Arabica coffee essence was the drip-extracted essence obtained by drip extraction of Arabica roasted coffee beans (10 g) with hot water (90°C) (100 mL).

The species ratio (%) in each of Table 5 and Table 6 below is the ratio (mass%) between the Liberica coffee bean-derived soluble solids and the Arabica coffee bean-derived soluble solids in the soluble solids of the beverage sample. The Liberica-derived soluble solids (%) in each of Table 5 and Table 6 is the Liberica coffee bean-derived soluble solids content (mass%) in the beverage sample.

The beverage sample was evaluated by six well-trained panelists in terms of the characteristic musty smell of *Coffea liberica.* The results obtained are shown in Table 5 below. The criteria for the musty smell are as described below.

### (Criteria for musty smell)

The musty smell was evaluated by the following criteria, based on the musty smell (strong musty smell) of the extracted coffee bean essence (drip-extracted essence having an isovaleric acid content per soluble solids of 10 ppm/Brix) according to Comparative Example 1.
"--": A strong musty smell was felt.
"-": A musty smell was felt.
"+": A musty smell was clearly reduced.
"++": No musty smell was felt.

**[Table 5]**

| | Species ratio [%] | | Brix. [%] | Liberica-derived soluble solids [%] | Musty smell | Comment |
|---|---|---|---|---|---|---|
| | Liberica | Arabica | | | | |
| Reference Example 1-1 | 10 | 90 | 1.0 | 0.1 | -- | A strong musty smell was felt. |
| Reference Example 1-2 | 1 | 99 | | 0.01 | - | |
| Reference Example 1-3 | 0.5 | 99.5 | | 0.005 | - | A musty smell was felt. |
| Reference Example 1-4 | 0.1 | 99.9 | | 0.001 | - | |
| Reference Example 1-5 | 0.01 | 99.99 | | 0.0001 | + | A musty smell was clearly reduced. |

The evaluation results of the musty smell wre the same among the panelists (evaluation results shiwb in Table 5). According to the results in Table 5 above, the musty smell was produced when the species ratio was 0.1 mass% or more ( the beverage had a Liberica coffee bean-derived soluble solids content of 0.001 mass % or more) in the beverage containing the coffee bean extract (drip-extracted essence) according to Comparative Example 1, which is a conventional coffee bean extract containing Liberica coffee beans in which the isovaleric acid content per soluble solids is not reduced to less than 10 ppm (Reference Examples 1-1 to 1-4). However, when the species ratio of the coffee bean extract according to Comparative Example 1 was 0.01 mass%, i.e., when the beverage had a Liberica coffee bean-derived soluble solids content of 0.0001 mass%, the musty smell was clearly reduced because the content was very low. This confirmed that the musty smell from Liberica coffee beans was produced when the beverage contains more than 0.0001 mass% Liberica coffee bean-derived soluble solids.

### <Examples 8-1 to 8-6 and Examples 9-1 to 9-6>

The extracted coffee bean essence (isovaleric acid content per soluble solids: 6.5 ppm/Brix) according to Example 1 and an Arabica coffee essence (isovaleric acid concentration per soluble solids: 1.28 ppm/Brix) were mixed at a species ratio described in Table 6 below. The mixture was mixed with commercially available natural water (product name: Suntory Minami-Alps Natural Mineral Water, Suntory Beverage & Food Limited) to achieve a soluble solids content of 1 mass%, whereby beverage samples according to Examples 8-1 to 8-6 were prepared.

The extracted coffee bean essence (isovaleric acid content per soluble solids: 0.51 ppm/Brix) according to Example 4 and an Arabica coffee essence (isovaleric acid concentration per soluble solids: 1.28 ppm/Brix) were mixed at a species ratio described in Table 6 below. The mixture was mixed with commercially available natural water (product name: Suntory Minami-Alps Natural Mineral Water, Suntory Beverage & Food Limited) to achieve a soluble solids content of 1 mass%, whereby beverage samples according to Examples 9-1 to 9-6 were prepared.

The Arabica coffee essence was the drip-extracted essence obtained by drip extraction of Arabica roasted coffee beans (10 g) with hot water (90°C) (100 mL).

The beverage sample was evaluated by six well-trained panelists in terms of the characteristic musty smell of *Coffea liberica.* The results obtained are shown in Table 6 below. The criteria for the musty smell are as described below.

### (Criteria for musty smell)

Similarly, the musty smell was evaluated by the following criteria, based on the musty smell (strong musty smell) of the extracted coffee bean essence (drip-extracted essence having an isovaleric acid content per soluble solids of 10 ppm/Brix) according to Comparative Example 1.
"--": A strong musty smell was felt.
"-": A musty smell was felt.
"+": A musty smell was clearly reduced.
"++": No musty smell was felt.

**[Table 6]**

| | Species ratio [%] | | Brix. [%] | Liberica-derived soluble solids [%] | Liberica-derived isovaleric acid concentration per Brix [ppm] | Isovaleric acid concentration per Brix [ppm] | Musty smell | Comment |
|---|---|---|---|---|---|---|---|---|
| | Liberica | Arabica | | | | | | |
| Example 8-1 | 100 | 0 | 1.0 | 1 | 6.5 | 6.500 | + | A musty smell was clearly reduced. |
| Example 8-2 | 50 | 50 | | 0.5 | 3.250 | 3.890 | + | |
| Example 8-3 | 10 | 90 | | 0.1 | 0.650 | 1.802 | + | |
| Example 8-4 | 1 | 99 | | 0.01 | 0.065 | 1.332 | + | |
| Example 8-5 | 0.1 | 99.9 | | 0.001 | 0.007 | 1.285 | ++ | No musty smell was felt. |
| Example 8-6 | 0.01 | 99.99 | | 0.0001 | 0.001 | 1.281 | ++ | |
| Example 9-1 | 100 | 0 | | 1 | 0.512 | 0.512 | ++ | |
| Example 9-2 | 50 | 50 | | 0.5 | 0.256 | 0.896 | ++ | |
| Example 9-3 | 10 | 90 | | 0.1 | 0.051 | 1.203 | ++ | |
| Example 9-4 | 1 | 99 | | 0.01 | 0.005 | 1.272 | ++ | |
| Example 9-5 | 0.1 | 99.9 | | 0.001 | 0.001 | 1.279 | ++ | |
| Example 9-6 | 0.01 | 99.99 | | 0.0001 | 0.000 | 1.280 | ++ | |

The evaluation results of the musty smell were the same among the panelist (evaluation results shown in Table 6). According to the results in Table 6 above, no musty smell was felt from the beverage sample containing the coffee bean extract according to Example 1 and the beverage sample containing the coffee bean extract according to Examples 4 when the isovaleric acid content per soluble solids was 1.285 ppm or less. This confirmed that the isovaleric acid content per soluble solids is particularly preferably 1.285 ppm or less in the beverage containing the coffee bean extract (less than 10 ppm) from coffee beans including Liberica coffee beans.

### <Test Example 1: Measurement of amount of compound (I) in various coffee beans (compound detected at m/z 727.35)>

Coffee beans of the species described in Table 7 below were used to prepare a drip-extracted liquid or an extracted essence.

The drip-extracted liquid was prepared by the following method (n = 2).

Various types of green coffee beans were roasted using a roasting machine, whereby roasted coffee beans with an L-value of 24 were obtained. Then, the roasted coffee beans were ground to a certain particle size (medium mode) using a roll mill grinder, whereby ground beans were obtained. A coffee filter was set in a dripper, and the ground beans (10 g) were placed therein for drip extraction with 150 mL hot water. After extraction, the Brix was measured, and the Brix of the liquid extract was adjusted to 0.3% with ultra-pure water.

The extracted essence was prepared by the following method (n = 2).

Various types of green coffee beans were roasted using a roasting machine, whereby roasted coffee beans with an L-value of 24 were obtained. Then, the roasted coffee beans were ground to a certain particle size (medium mode) using a roll mill grinder, whereby ground beans were obtained. The ground beans were extracted at a maximum extraction temperature of 180°C using a continuous multi-tube extraction machine. The ground beans were introduced in an amount of 5.4 kg per column, and extraction was continued until a liquid extract in a predetermined amount was obtained, whereby a liquid extract in an amount of 38 kg (in terms of liquid volume) per column was obtained.

The liquid extract was cooled using a plate heat exchanger. After cooling, the liquid extract was centrifuged using a centrifuge (centrifuged at a supply flow rate of 14 L/h), whereby insoluble matter was removed. The moisture in the resulting supernatant liquid (liquid extract from which the insoluble matter was removed) was vaporized using a centrifugal thin film vacuum evaporator (available from Ookawara Manufacturing, Co., Ltd.) at a temperature of about 50°C to 60°C to concentrate the residual coffee liquid (liquid containing coffee soluble solids), whereby an extracted essence of various coffee beans was obtained. The Brix of the extracted coffee bean essence was measured, and the Brix of the essence was adjusted to 0.3% with ultra-pure water.

### (Measurement of amount of compound (I) (compound detected at m/z 727.35) in drip-extracted liquid or extracted essence of various coffee beans)

The amount of the compound (I) in the drip-extracted liquid or extracted essence obtained above was measured. A sample for analysis was prepared by the following method and was analyzed by LC-MS (negative mode) in the same manner as measured in Examples 1 to 7 described above.

For the extracted essence, a sample for analysis was prepared by the following method.

The extracted essence (0.3 Brix) obtained above and ethanol (EtOH) were mixed at a volume ratio of 1:1, whereby a 50% EtOH coffee essence was prepared. Xanthohumol as an internal standard reagent was adjusted to 10,000 ppm with 50% EtOH. The 50% EtOH coffee essence (400 pL) and the internal standard reagent (4 µL) were mixed, and the mixture was filtered through a 200-µm filter, whereby a sample for analysis was obtained.

The method of preparing a sample for analysis of the extracted essence was repeated, except that the drip-extracted liquid (0.3 Brix) obtained above was used instead of the extracted essence, whereby a sample for analysis of the drip-extracted liquid was prepared.

The sample for analysis was dispensed into microvials for high performance liquid chromatography, followed by LC-MS analysis (negative mode). In other words, the aqueous solution (aqueous solution of the coffee bean extract) containing 0.3 mass% soluble solids was diluted in half with ethanol and subjected to LC-MS analysis in negative mode using 99 ppm xanthohumol as an internal standard. The LC-MS analysis was carried out under analysis conditions as in the conditions 2. The average value of n = 2 was taken as the measured value.

The results obtained are shown in Table 7 below. In Table 7, "Drip" means the drip-extracted liquid, and "Essence" means the extracted essence.

**[Table 7]**

| Species | Sample (species) | Production area | Compound (I) detected at m/z 727.35 [area] | Xanthohumol (XN) [area] | Compound (I) with XN as internal standard (in terms of IS) |
|---|---|---|---|---|---|
| Liberica | Liberica drip (Excelsa) | Vietnam | 800,116 | 2,015,225 | 0.397 |
| | Barako drip (Barako) | Vietnam | 746,323 | 1,908,130 | 0.391 |
| | Liberica essence (Excelsa) | Vietnam | 798,144 | 1,888,621 | 0.423 |
| Arabica | Arabica drip (BRA No. 2 SS) | Brazil | 113,892 | 1,902,412 | 0.060 |
| | Arabica essence (ETH G4) | Ethiopia | 193,515 | 1,867,596 | 0.104 |
| | Arabica drip (COL EXC) | Columbia | 273,230 | 2,811,827 | 0.097 |
| | Arabica drip (Vietnam G1) | Vietnam | 35,888 | 2,594,752 | 0.014 |
| | Arabica drip (Uganda DRUGAR) | Uganda | 131,373 | 2,689,764 | 0.049 |
| | Arabica drip (ETH G4) | Ethiopia | 308,545 | 3,065,232 | 0.101 |
| | Arabica drip (GUA SHB) | Guatemala | 104,421 | 3,108,468 | 0.034 |
| | Arabica drip (NES AP1) | Blend | 38,840 | 3,089,720 | 0.013 |
| | Arabica drip (TAN AMEX) | Tanzania | 132,664 | 3,240,452 | 0.041 |
| Robusta | Robusta drip (BIET G1 P&S) | Vietnam | 37,529 | 2,068,556 | 0.018 |
| | Robusta drip (UGABDA rob) | Uganda | 29,290 | 3,015,072 | 0.010 |

In Table 7, "Compound (I) with XN as internal standard (in terms of IS)" is the ratio of the area value at m/z 727.35 of the compound (I) (Compound (I) detected at m/z 727.35 [area]) to the area value of xanthohumol at m/z 353.30 (Xanthohumol (XN) [area]). In Table 7, "Compound (I) detected at m/z 727.35 [area]" and "Xanthohumol (XN) [area]" are respectively the peak area value at m/z 727.35 and the peak area value at m/z 353.30 obtained in the LC-MS analysis.

The results in Table 7 confirmed that the amount of the compound detected at m/z 727.35 is significantly larger in the coffee bean extracts each containing Liberica coffee beans than the coffee bean extracts each containing Arabica or Robusta coffee beans. It was also confirmed that the raw material coffee beans of an extract are considered to include Liberica coffee beans in the case where the ratio of the area value at m/z 727.35 of the compound to the area value at m/z 353.30 of xanthohumol is 0.11 or greater when an aqueous solution of the extract containing 0.3 mass% soluble solids is diluted in half with ethanol and subjected to LC-MS analysis using 99 ppm xanthohumol as an internal standard.

### <Test Example 2>

Isovaleric acid of food additive grade was added to the beverage sample having an isovaleric acid concentration of 0.512 ppm and 1.0 Brix according to Example 9-1 (hereinafter referred to as "Liberica essence"), whereby samples with varying concentrations were produced.

First, isovaleric acid was diluted with ethanol, whereby an ethanol-isovaleric acid solution having an isovaleric acid concentration of 1000 ppm was produced.

The ethanol-isovaleric acid solution was added to the Liberica essence (1.0 Brix) (200 ml), whereby samples with varying concentrations were produced. The concentration range in which the musty smell is felt was evaluated sensorily.

Each sample was evaluated by six well-trained panelists in terms of the musty smell associated with isovaleric acid. Similarly, the musty smell was evaluated by the following criteria, based on the musty smell (strong musty smell) of the extracted coffee bean essence (drip-extracted essence having an isovaleric acid content per soluble solids of 10 ppm/Brix) according to Comparative Example 1.

### (Criteria for musty smell)

"--": A strong musty smell was felt.
"-": A musty smell was felt.
"+": A musty smell was clearly reduced.
"++": No musty smell was felt.

The results obtained are shown in Table 8 below. The results of the sensory evaluation were the same among the panelists (evaluation results shown in Table 8). When the isovaleric acid concentration is less than 10 ppm, the musty smell is reduced as compared to when the isovaleric acid concentration is 10 ppm. The results confirmed that no musty smell is felt when the isovaleric acid concentration is 7 ppm or less.

**[Table 8]**

| Isovaleric acid concentration | Results of sensory evaluation |
|---|---|
| 6.5 ppm | ++ |
| 7.0 ppm | ++ |
| 8.0 ppm | - |
| 9.0 ppm | - |
| 10.0 ppm | -- |

### INDUSTRIAL APPLICABILITY

The present invention provides a coffee bean extract containing Liberica coffee beans and having an improved flavor with a less musty smell. The coffee bean extract of the present invention is useful as a food or beverage such as a coffee beverage or as a raw material thereof.

## Claims

1. A coffee bean extract, comprising:
an isovaleric acid content per soluble solids of less than 10 ppm,
wherein the coffee beans include Liberica coffee beans.

2. A coffee bean extract comprising:
isovaleric acid; and
a compound (I) detected at m/z 727.35 in LC-MS analysis,
wherein an isovaleric acid content per soluble solids is less than 10 ppm, and
a ratio of an area value at m/z 727.35 of the compound (I) to an area value at m/z 353.30 of xanthohumol is 0.11 or greater when an aqueous solution of the coffee bean extract containing 0.3 mass% soluble solids is diluted in half with ethanol and subjected to LC-MS analysis using 99 ppm xanthohumol as an internal standard.

3. A food or beverage comprising:
the coffee bean extract according to claim 1 or 2,
wherein an isovaleric acid content per soluble solids is less than 10 ppm.

4. The food or beverage according to claim 3,
wherein the soluble solids include Liberica coffee bean-derived soluble solids, and the Liberica coffee bean-derived soluble solids content is more than 0.0001 mass%.

5. The food or beverage according to claim 3,
wherein the food or beverage is a coffee beverage.

6. The food or beverage according to claim 3,
wherein the food or beverage is a coffee concentrate.

7. The food or beverage according to claim 3,
wherein the food or beverage is an instant coffee.

8. An aroma-imparting composition, comprising:
the coffee bean extract according to claim 1 or 2.

9. A beverage in a sealed container, comprising:
a coffee bean extract from coffee beans including Liberica coffee beans, wherein an isovaleric acid content per soluble solids is less than 10 ppm.

10. The beverage in a sealed container according to claim 9,
wherein the beverage is a coffee beverage.

11. A method of producing a coffee bean extract, comprising:
a roasting step of roasting coffee beans including Liberica coffee beans to obtain roasted coffee beans;
an extraction step of obtaining an extract from the roasted coffee beans with water; and
an isovaleric acid reduction step of reducing the isovaleric acid content per soluble solids to less than 10 ppm in the extract obtained.
